# EUROPEAN PATENT SPECIFICATION

(11) **EP 2 702 274 B1**
(45) Date of publication and mention of the grant of the patent: **27.04.2016**
(21) Application number: 12723591.9
(22) Date of filing: 27.04.2012
(51) Int. Cl.: F04B 39/10

(54) **VALVE ARRANGEMENT FOR HERMETIC COMPRESSORS**
VENTILANORDNUNG FÜR HERMETISCHE VERDICHTER
ENSEMBLE SOUPAPE POUR COMPRESSEURS HERMÉTIQUES

(30) Priority: 28.04.2011 BR PI1101993
(43) Date of publication of application: 05.03.2014
(73) Proprietor: Whirlpool S.A., 04578-000 São Paulo SP (BR)
(72) Inventor: FAGOTTI, Fabian, 80730-420 Curitiba - PR (BR)
(74) Representative: Patentanwälte Geyer, Fehners & Partner mbB
(86) International application number: PCT/BR2012/000120
(87) International publication number: WO 2012/145812

(56) References cited:
- EP-A2- 2 574 787
- WO-A2-02/06672
- WO-A2-2005/010363
- AT-U1- 10 394
- GB-A- 333 319

## Description

### Field of the invention

The present invention refers to a constructive arrangement directed to the seating of the valve vane of hermetic compressors used in refrigeration systems, for example in household refrigeration systems, such as refrigerators, freezers, water fountains, etc.

The present invention is to be particularly applied to a hermetic compressor comprising a cylinder crankcase defining a compression cylinder with an end closed by a valve plate provided with suction and discharge orifices contained within the inner contour of the axial projection of the compression cylinder. At least one suction orifice and one discharge orifice are each closed by a respective flexible reed valve presenting a mounting end portion, to be affixed to the valve plate, a bending median portion, and a sealing end portion, which is operatively associated with the orifice in the valve plate.

### Background of the invention

The energetic efficiency of the small hermetic refrigeration compressors is mostly attributed to the good performance of the suction and discharge systems of said compressors, particularly the performance of the valves of said systems in controlling the gas flow, which systems include suction and discharge orifices, suction and discharge valves and, generally, one or more noise mufflers. Part of the energy losses in these compressors is caused by the load loss in the suction and discharge systems thereof. Thus, solutions intended to reduce such losses actuate directly in increasing the efficiency of the compressor.

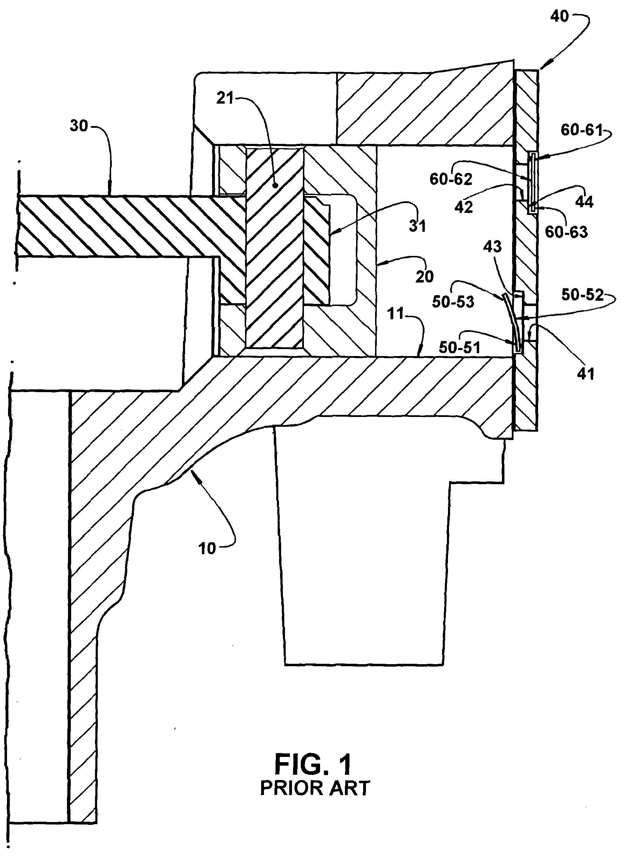

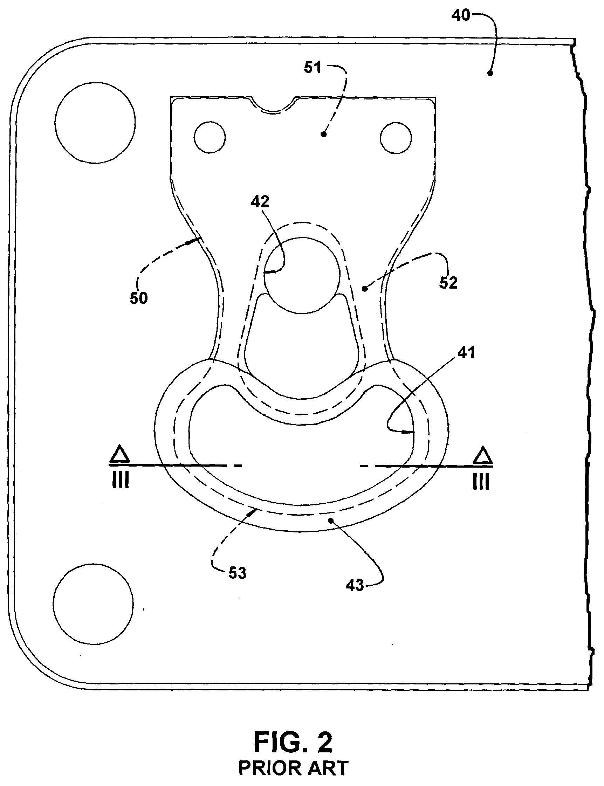

As illustrated in figures 1 and 2, the present valve arrangement is applied to refrigeration compressors of the type comprising a crankcase 10 which defines a compression cylinder 11 inside which a piston 20 is displaced by a connecting rod 30, in a reciprocating movement, when a crankcase (not illustrated) is driven by the usual electric motor of the compressor. The connecting rod 30 has its smaller eye 31 coupled to the piston 20 by a piston pin 21.

The compression cylinder 11 has an end, opposite to that end for mounting the connecting rod 30, closed by a valve plate 40 provided with at least one suction orifice 41 and one discharge orifice 42, which are associated to respective suction and discharge valves defined by suction vanes 50 and discharge vanes 60.

The vanes of the suction and discharge valves block the gas flow passage through the respective suction orifice 41 and discharge orifice 42, as a function of the pressure differential between the downstream and upstream sides of said vanes. In these constructions, each vane is angularly displaced, in a determined sense, to an opening position of the respective orifice of the valve plate 40, the angular displacement in the opposite sense being limited by the seating of the vane against the valve plate 40, closing the respective gas passage orifice.

The reed valves are widely used in positive displacement machines, in which the flow is established in an intermittent way. In general, said reed valves are used to establish a one-way flow, from the higher pressure, upstream the valve, towards the lower pressure, downstream the valve.

In the specific case of the reciprocating compressors, one or more suction valves are normally used, which define the suction flow only in the direction from the lower pressure of the circuit to the interior of the cylinder. Moreover, one or more discharge valves are also used, which define the discharge flow only in the direction from the interior of the compression cylinder, to the high pressure side of the circuit. An optimized valve design implies minimization of the refluxes, and also dynamics of the vane in the operation of the compressor, minimizing the load losses and maximizing the mass flow. The main design restrictions are defined by the degree of reliability and by the noise generation limits.

The vane of each valve is submitted to stresses which, when superior to a certain limit fatigue stress of the vane material, make the valve break. The stress over the vane is a function of the shape and dimension of the cross section of the orifice, that is, of the free clearance to be closed by the vane.

In order to facilitate the manufacturing process, the suction orifice 41 and discharge orifice 42 usually present a circular cross section and are constructed in a valve plate 40, usually made of steel. However, such circular orifices result in high stress over the valve vane, exactly in the central region of the orifice, equidistant from its peripheral region onto which the vane seats on the valve plate 40.

The solution object of patent US7083400 presents a suction orifice construction having a contour and a dimensioning which are defined so that the orifice is contained in the interior of the axial projection of the contour of the compression cylinder and externally to a discharge orifice, also internal to said axial projection of the contour of the cylinder.

Although the shape of the suction orifice of document US7083400 results in a larger gas passage area, increasing the suction efficiency, said larger area also implies greater bending moments (loads) over the vane, since the resulting force over the latter is given by the product of the orifice area multiplied by the pressure difference between the upstream and downstream sides of the valve vane. Greater loads have negative implications when reliability is concerned.

There are known two ways to achieve the adequate reliability, considering a determined passage area of the valve plate orifices: one way refers to the use of nobler materials, and the other way to increase the vane thickness. The first alternative is very restrictive as to the use of economically viable materials and always implies more costs. The second alternative requires a vane with characteristics, such as higher mass and higher rigidity, which are both prejudicial to efficiency.

There are known different solutions in which there is provided, in the valve plate, a support means in the region of the gas passage orifice, in order to provide a support in the vicinity of the region presenting higher stress over the valve vane, or reducing the stress thereon, resulting from the pressure differential on both sides of the valve plate (JP09-126133, JP2008-038694).

These known solutions present the support means in the form of radial projections internal to the suction orifice, so as to obtain maximum benefit as to balance efficiency between the reduction of vane stress and the maximization of the gas passage area.

Nevertheless, such solutions still not avoid the deformation of the vane in the more central region of its portion coinciding with the contour of the orifice in the valve plate, compromising its sealing efficiency and favoring noise generation.

Another known solution is defined in document JP2005-105868A which presents a suction valve construction in which only one sealing portion of the valve vane closes two adjacent suction orifices, which are separated from each other by the same common wall. In said construction, the central region of the sealing portion of the vane of the suction valve is seated on the common dividing wall between the two orifices, which wall defines a support means centralized in relation to the suction vane.

While said prior art solution improves the support condition of the sealing portion of the valve vane, coinciding with the contour of the suction orifices, it presents some disadvantages, such as increasing the action of the adhesion force of the vane to the support means, due to the presence of oil between the vane and the support means, which leads to high losses, as a function of the delays produced in the valve opening time.

Another inconvenience of said prior solution results from the provision of two independent suction orifices, which tends to produce asymmetries inherent to the manufacturing processes of the valve plate provided with its gas passage orifices. Small geometric asymmetries imply considerable asymmetries in the gas flow through said orifices, making the valve vane operate asymmetrically. If asymmetry occurs upon closure of the valve vane, it is possible that a portion of the vane reaches the valve plate seat before the remaining parts of the sealing portion of the vane, drastically increasing the impact stress and reducing the reliability of the valve.

The EP 2 574 787 is regarded as being the closest prior art and discloses the features of the preamble of claim 1.

### Disclosure of the invention

As a function of the limitations mentioned above and related to the known constructions, the invention has the object to provide a valve arrangement for hermetic refrigeration compressors, which increases the gas passage efficiency through the orifices of the valve plate, particularly through the suction orifices, without impairing the reliability of the valve.

Another object of the present invention is to provide a valve arrangement of the type cited above and which reduces the loads and stresses over the valve vane, without requiring the use of nobler and higher cost materials, neither increasing the thickness of the vane, in order to guarantee the operational reliability during the useful operative life of the compressor.

These and other objects are attained by a valve arrangement for hermetic compressors of the type which comprises: a cylinder crankcase defining a compression cylinder; a valve plate closing one end of the compression cylinder and provided with suction and discharge orifices and with respective seat regions, each of said orifices being closed by a respective valve vane, comprising a sealing end portion which is operatively associated with the respective orifice and peripherally seated, in a closed condition, against a seat region of the respective valve vane, in the valve plate.

According to the present invention, the valve plate of the present arrangement carries a support means defined in the central region of the contour of at least one of said suction and discharge orifices and incorporated to the valve plate by at least one radial arm, internal to the respective orifice, said support means having a stop surface, against which is seated a central region of the sealing portion of the respective vane, said stop surface defining a projection in relation to the radial arm.

In a particular form of the present invention, the arrangement comprises a single radial arm presenting a free end in which the support means is incorporated.

In another way of carrying out the present invention, the stop surface of the support means may be coplanar or elevated in relation to the seat region of the respective valve vane.

The construction proposed by the invention and defined above allows the valve vane to have its central region, and only it, to be seated on the support means in the closed valve position. Thus, there is achieved a reduction of the free clearance to be covered by the sealing portion of the vane, as well as the reduction of the adhesion area of the vane to the support means, leading to reducing the stresses acting over the vane, as well as the adhesion forces of the vane to the valve plate, in the valve opening initial moments. Besides the advantages above, the provision of a central support means, which can be sustained by only one radial arm, allows maximizing the gas passage area through the orifice, with less load loss. The construction considered herein allows reducing the asymmetries in the production of the orifice and of the respective support means, avoiding the previously mentioned drawbacks related to the prior art.

Another advantage of the present invention refers to the higher strength as to asymmetries inherent to the manufacturing processes of the valve plate. The production of two distinct orifices tends to provoke dimensional and gas flow asymmetries, compromising the adequate operation of the compressor.

Another advantage of the present invention, particularly related to the solution of document JP2005-105868A, results from the fact that the support sections of the valve, which are internal to the orifice, do not present a sealing effect, allowing higher dimensional deviations to occur caused by the manufacturing processes of the valve plate.

The central support means of the present invention reduces the stresses to which the valve is submitted, without causing relevant flow restrictions, since the central region of the orifice is practically inoperative in terms of effective flow area, that is, any element positioned in this central region little interferes in the refrigerant gas flow through the orifice in the valve plate.

### Brief description of the drawings

The invention will be described below, with reference to the appended drawings, in which:
Figure 1 represents, in a partial vertical sectional view, a refrigeration compressor comprising a crankcase which incorporates a compression cylinder closed by a valve plate and lodging a reciprocating piston coupled to a connecting rod, in a known prior art constructive arrangement;
Figure 2 represents, schematically, a partial plan view of the valve plate, when seen from the side of the compression cylinder, and illustrating, in continuous solid lines, the suction and discharge orifices and, in dashed lines, a flexible suction vane, in a constructive arrangement of the prior art;

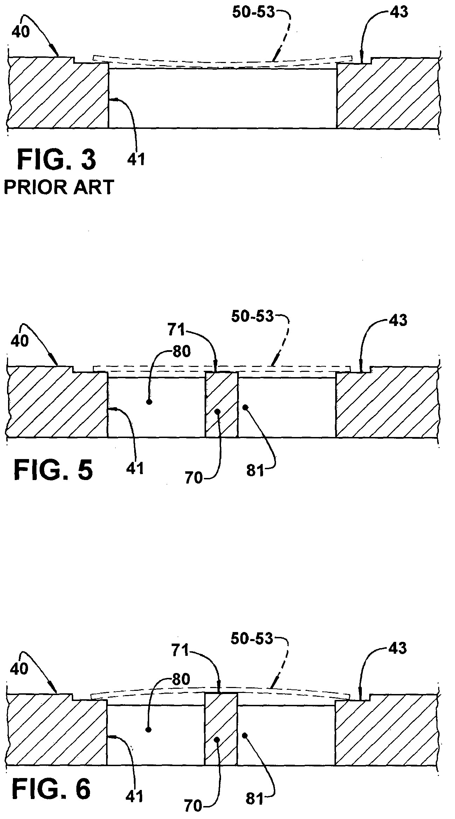

Figure 3 represents a sectional view of the valve plate of figure 2, taken according to line III-III in the latter, and schematically illustrating the positioning of the suction valve vane in the closed condition, and deformed by the pressure differential between its two sides;

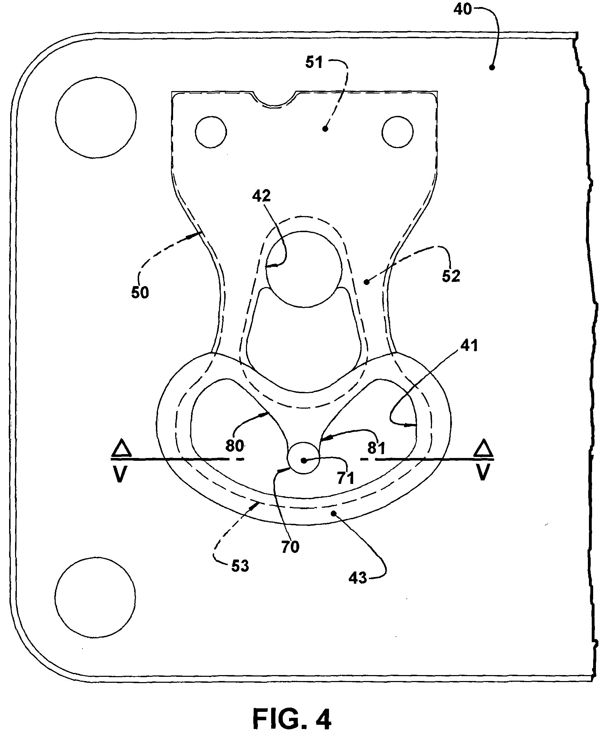

Figure 4 represents a view similar to that of figure 2, but illustrating a valve plate constructed according to the present invention;
Figure 5 represents a sectional view of the valve plate of figure 4, taken according with line V-V in the latter and illustrating, schematically, the positioning of the suction valve vane in its closed condition, medianly seated on the central support means provided in the suction orifice; and
Figure 6 illustrates a view similar to that of figure 5, but presenting a central support means defining a median vane seating surface, positioned in a plane that is slightly elevated in relation to that seating plane of the vane marginal region on the valve plate.

### Description of the illustrated embodiment

The present invention will be described for a hermetic compressor used in refrigeration systems, for example, in household or commercial refrigeration systems of the type previously described.

The hermetic compressor comprises the cylinder crankcase 10 defining the compression cylinder 11 and the valve plate 40 closing one end of the compression cylinder 11 and provided with a suction orifice 41 and with a discharge orifice 42, and their respective seat regions 43, 44, each of said suction orifice 41 and discharge orifice 42 being closed by a respective valve suction vane 50 and valve discharge vane 60.

Each suction vane 50 and each discharge vane 60 presents: a mounting end portion 51, 61, to be affixed to the valve plate 40; a bending median portion 52, 62; and a sealing end portion 53, 63, operatively associated with the suction orifice 41 or discharge orifice 42 and which is displace, by elastic deformation, between a close valve position, blocking the gas passage through the respective suction orifice 41 and discharge orifice 42, and an open valve position, allowing said gas passage.

Each suction vane 50 and each discharge vane comprises a sealing end portion 53, 63, operatively associated with the respective suction orifice 41, 42 and which is peripherally seated, in a closed condition, against a respective seat region 43, 44 defined in the valve plate 40, around the respective suction orifice 41 and discharge orifice 42.

According to the present invention, the valve plate 40 of the present arrangement carries a support means 70 defined in the central region of the contour of at least one of said suction orifice 41 and discharge orifice 42 and incorporated to the valve plate 40 by at least one radial arm 80, internal to the respective orifice, said support means 70 having a stop surface 71, against which is seated a central region of the sealing portion 53, 63 of the respective suction vane 50 or discharge vane 60, said stop surface 71 defining a projection in relation to the radial arm 80.

The central positioning of the support means 70 results in a support for the vane, in a region coinciding or substantially coinciding with the region of higher stress over the vane, caused by the pressure differential between its upstream and downstream sides, when said vane is found in the closed position.

The radial arm 80 can present different constructive forms, provided that they do not cause significant losses as to the gas flow passage through the respective suction orifice 50 or discharge orifice 60, nor generate turbulences and noise in said gas flow.

According to the illustrated constructive form, the present arrangement comprises a single radial arm 80 presenting a free end 81 in which is incorporated the support means 70. Said radial arm 80 presents a massive constitution, having a slightly triangular profile, but with end portions matching with the adjacent inner wall portions of the respective orifice.

In a way of carrying out the present invention, which is independent of the constructive form of the radial arm 80, the stop surface 71 of the support means 70 is defined to be coplanar with the seat region 43, 44, of the respective valve vane 41, 42.

In another way of carrying out the present invention, which is independent of the constructive form of the radial arm 80, the stop surface 71 of the support means 70 is elevated in relation to the seat region 43, 44 of the respective valve vane 41, 42.

In any one of the constructions above, the stop surface 71 should be provided in the form of a projection in relation to the surface of the radial arm 80 turned to the respective suction vane 50 or discharge vane 60 to be seated against said stop surface 71, in order to limit the median seating area of the sealing portion 53, 63, of the vane 50, 60, to the area of the stop surface 71. The only median region of the sealing portion 53, 63 of the vane 50, 60, which can suffer some effect of adhesion, by the oil film, to the radial arm 80-support means 70 assembly, is the region limited to the area of the stop surface 71.

The stop surface 71, by being elevated in relation to the radial arm 80, has the advantages presented below.

An advantage refers to the fact that the vane region, which is submitted to a first impact upon the closing of the valve, is situated relatively distant from the edge of the vane. Thus, the stress waves, generated by the closing impact of the orifice, by the seating of the valve vane, are dampened upon reaching the vane edge, in which region are found the more relevant surface imperfections of the vane, which make the latter fragile.

In this region of the vane, there usually occur cracks, which can break the valve, by impact stress.

With the construction of the present invention, there occurs a dampening of the impact stress over the vane edge, avoiding the formation of cracks in this region and the consequent breakage of the vane, improving the reliability thereof.

Another advantage of this particular construction results from the formation of a positive pre-stress in the vane, when the valve is closed, which anticipates the opening of the valve, which pre-stress brings benefits in terms of efficiency and noise.

According to the present invention, the stop surface 71 presents a contour which is concentric and symmetric in relation to the longitudinal axis of the respective orifice 41, 42 in the valve plate 40, which arrangement avoids asymmetry stresses to the suction vane 50 or discharge vane 60.

In a particular form, the stop surface 71 is circular and substantially constant along the height of the support means, giving strength to the latter.

Said support means 70 has its contour contained in the axial projection of the contour of the stop surface 71, whereby the entire support means 70 remains contained in the central region of the orifice, in which there is practically no flow, preventing that the presence of the support means 70 produces load losses that are prejudicial to the refrigerant gas flow through the orifice.

The existence of the support means 70, in a central position, allows increasing the gas passage area, without increasing the stress over the vane and, in determined constructions, reducing said stress. As known, the flow area increases with the increase of the cross section of the orifice, which increase of the cross section increases the stress over the valve vane, due to the increase of the bending moment to which the valve vane is submitted by the increase of the cantilevered section.

Any construction which provides a central support to the region of the valve vane originally in cantilever will reduce said bending moment and, consequently, the stresses over the valve vane. Thus, there is a physical limitation, in terms of reliability, of how much one can increase the cross section of the orifice, which limitation can be overcome with the provision of a central support means.

The construction of the present invention allows using vanes with much reduced thicknesses, bringing great benefits in terms of efficiency, without compromising the reliability. Moreover, the provision of said support means 70 minimizes the deformation of the vane when under pressure, improving the sealing characteristics of the vane, bringing benefits in terms of efficiency and noise reduction.

While only one exemplary embodiment for the present invention has been illustrated herein, it should be understood that alterations of the form and arrangement of the elements can be made, without escaping from the constructive concept defined in the claims that accompany the claims of the present disclosure.

## Claims

1. Valve arrangement for hermetic compressors of the type which comprises: a cylinder crankcase (10) defining a compression cylinder (11); a valve plate (40) closing one end of the compression cylinder (11) and which is provided with a suction orifice (41) and a discharge orifice (42) and with respective seat regions (43, 44), each of said orifices (41, 42) being closed by a respective valve vane (50, 60) comprising a sealing end portion (53, 63) operatively associated with the respective orifice (41, 42) and peripherally seated, in a closed condition, against a seat region (43, 44) of the respective valve vane (50, 60) in the valve plate (40), whereby the valve plate (40) carries a support means (70) defined in the central region of the contour of at least one of said suction orifice (41) and discharge orifice (42) and incorporated to the valve plate (40) by at least one radial arm (80), internal to the respective orifice (41, 42), said support means (70) having a stop surface (71), against which is seated a central region of the sealing portion (40) of the respective vane (50, 60), the arrangement being **characterised in that** said stop surface (71) defining a projection in relation to the radial arm (80) so a to be remained contained only in the central region.

2. The arrangement, according to claim 1, **characterized in that** it comprises a single radial arm (80) presenting a free end (81) in which the support means (70) is incorporated.

3. The arrangement, according to any one of claims 1 or 2, **characterized in that** the stop surface (71) of the support means (70) is coplanar to the seat region (43, 44) of the respective valve vane (50, 60).

4. The arrangement, according to any one of claims 1 or 2, **characterized in that** the stop surface (71) of the support means (70) is elevated in relation to the seat region (43, 44) of the respective valve vane (50, 60).

5. The arrangement, according to any one of claims 1 to 4, **characterized in that** stop surface (71) presents a contour which is concentric and symmetric in relation to the longitudinal axis of the respective orifice (41, 42) in the valve plate (40).

6. The arrangement, according to claim 5, **characterized in that** the stop surface (71) is circular.

7. The arrangement, according to claim 5, **characterized in that** the support means (70) has its contour contained in the axial projection of the contour of the stop surface (71).

## Patentansprüche

1. Ventilanordnung für einen abgeschlossenen Kompressor einer Art, die aufweist: einen einen Kompressionszylinder (11) festlegenden Zylinderblock (10), eine Ventilplatte (40), die ein Ende des Kompressionszylinders (11) verschließt und mit einer Ansaugöffnung (41) und einer Auslassöffnung (42) und Sitzbereichen (43, 44) versehen ist, wobei jede der Öffnungen (41, 42) durch eine entsprechende Ventilklappe (50, 60) verschlossen ist, die einen Dichtungsendabschnitt (53, 63) aufweist, welcher der entsprechenden Öffnung (41, 42) wirkend zugeordnet ist und im geschlossenen Zustand am Rand dichtend an einem Sitzbereich (43, 44) der entsprechenden Ventilklappe (50, 60) in der Ventilplatte (40) anliegt, wobei die Ventilplatte (40) ein Stützmittel (70) aufweist, welches im zentralen Bereich des Umrisses der Ansaugöffnung (41) und/oder der Auslassöffnung (42) gebildet ist und in die Ventilplatte (40) durch mindestens einen radialen Arm (80) innerhalb der entsprechenden Öffnung (41, 42) eingegliedert ist, wobei das Stützmittel (70) eine Anschlagfläche (71) aufweist, an der ein zentraler Bereich des Sitzabschnittes (70) der entsprechenden Klappe (50, 60) dichtend anliegt, wobei die Anordnung **dadurch gekennzeichnet ist, dass** die Anschlagfläche (71) gegenüber dem radialen Arm (80) einen Vorsprung bildet, sodass sie nur im zentralen Bereich aufgenommen verbleibt.

2. Anordnung nach Anspruch 1 **dadurch gekennzeichnet, dass** sie einen einzigen radialen Arm (80) aufweist, der ein freies Ende (81) hat, in welches das Stützmittel (70) eingegliedert ist.

3. Anordnung nach Anspruch 1 oder 2, **dadurch gekennzeichnet, dass** die Anschlagfläche (71) des Stützmittels (70) koplanar mit dem Sitzbereich (43, 44) der entsprechenden Ventilklappe (50, 60) ist

4. Anordnung nach Anspruch 1 oder 2, **dadurch gekennzeichnet, dass** die Anschlagfläche (71) des Stützmittels (70) gegenüber dem Sitzbereich (43, 44) der entsprechenden Ventilplatte (50, 60) erhöht ist.

5. Anordnung nach einen der Ansprüche 1 bis 4, **dadurch gekennzeichnet, dass** die Anschlagfläche (71) einen Umriss hat, der konzentrisch und symmetrisch zur Längsachse der entsprechenden Öffnung (41, 42) der Ventilplatte (40) ist.

6. Anordnung nach Anspruch 5, **dadurch gekennzeichnet, dass** die Anschlagfläche (71) kreisförmig ist.

7. Anordnung nach Anspruch 5, **dadurch gekennzeichnet, dass** das Stützmittel (70) einen Umriss hat, der innerhalb einer achxialen Projektion des Umrisses der Anschlagfläche (71) liegt.

## Revendications

1. Agencement de soupape pour des compresseurs hermétiques du type qui comprend : un carter de cylindre (10) définissant un cylindre compresseur (11) ; une plaque porte-soupape (40) fermant une extrémité du cylindre compresseur (11) et qui est pourvue d'un orifice d'aspiration (41) et d'un orifice d'évacuation (42) et de régions de siège (43, 44) respectives, chacun desdits orifices (41, 42) étant fermé par une aube de soupape (50, 60) respective comprenant une partie d'extrémité de scellement (53, 63) associée opérationnellement à l'orifice (41, 42) respectif et assise périphériquement, dans un état fermé, contre une région de siège (43, 44) de l'aube de soupape (50, 60) respective dans la plaque porte-soupape (40), moyennant quoi la plaque porte-soupape (40) porte un moyen de support (70) défini dans la région centrale du contour d'au moins l'un dudit orifice d'aspiration (41) et dudit orifice d'évacuation (42) et incorporé à la plaque porte-soupape (40) par au moins un bras radial (80), à l'intérieur de l'orifice (41, 42) respectif, ledit moyen de support (70) ayant une surface de butée (71), contre laquelle est assise une région centrale de la partie de scellement (40) de l'aube (50, 60) respective, l'agencement étant **caractérisé en ce que** ladite surface de butée (71) définit une protubérance par rapport au bras radial (80) de façon à rester contenue uniquement dans la région centrale.

2. Agencement selon la revendication 1, **caractérisé en ce qu'**il comprend un seul bras radial (80) présentant une extrémité libre (81) dans laquelle le moyen de support (70) est incorporé.

3. Agencement selon l'une quelconque des revendications 1 ou 2, **caractérisé en ce que** la surface de butée (71) du moyen de support (70) est coplanaire à la région de siège (43, 44) de l'aube de soupape (50, 60) respective.

4. Agencement selon l'une quelconque des revendications 1 ou 2, **caractérisé en ce que** la surface de butée (71) du moyen de support (70) est haute par rapport à la région de siège (43, 44) de l'aube de soupape (50, 60) respective.

5. Agencement selon l'une quelconque des revendications 1 à 4, **caractérisé en ce que** la surface de butée (71) présente un contour qui est concentrique et symétrique par rapport à l'axe longitudinal de l'orifice (41, 42) respectif dans la plaque porte-soupape (40).

6. Agencement selon la revendication 5, **caractérisé en ce que** la surface de butée (71) est circulaire.

7. Agencement selon la revendication 5, **caractérisé en ce que** le moyen de support (70) a son contour contenu dans la protubérance axiale du contour de la surface de butée (71).
